# EUROPEAN PATENT APPLICATION

(11) **EP 3 002 073 A1**
(43) Date of publication of application: **06.04.2016**
(21) Application number: 15184056.8
(22) Date of filing: 07.09.2015
(51) Int. Cl.: B23H 1/10, B01J 49/00, C02F 1/00, C02F 1/42

(54) **ELECTRIC DISCHARGE MACHINE**

(30) Priority: 08.09.2014 JP 2014182570
(71) Applicant: FANUC CORPORATION, Oshino-mura Minamitsuru-gun Yamanashi 401-0597 (JP)
(72) Inventor: HAN, Nan, Minamitsuru-gun, Yamanashi 401-0597 (JP); KAWAHARA, Akiyoshi, Minamitsuru-gun, Yamanashi 401-0597 (JP); NAKASHIMA, Yasuo, Minamitsuru-gun, Yamanashi 401-0597 (JP)
(74) Representative: Ward, James Norman

(57) **Abstract**

An electric discharge machine for changing a specific resistance of a working fluid by flowing the working fluid through a circulation line including an ion-exchange device (5), the electric discharge machine includes a specific resistance detection unit (7) configured to detect a specific resistance of the working fluid, a flow time measuring unit (4) configured to measure flow time of the working fluid into the ion-exchange device (5), and a determination unit (8) configured to determine that the ion-exchange device (5) reaches a life end, when change value of the specific resistance of the working fluid is out of the predetermined range.

## Description

### BACKGROUND OF THE INVENTION

### 1. Field of the Invention

The present invention relates to an electric discharge machine using conductive working fluid, and particularly to lifetime determination of an ion-exchange device thereof.

### 2. Description of the Related Art

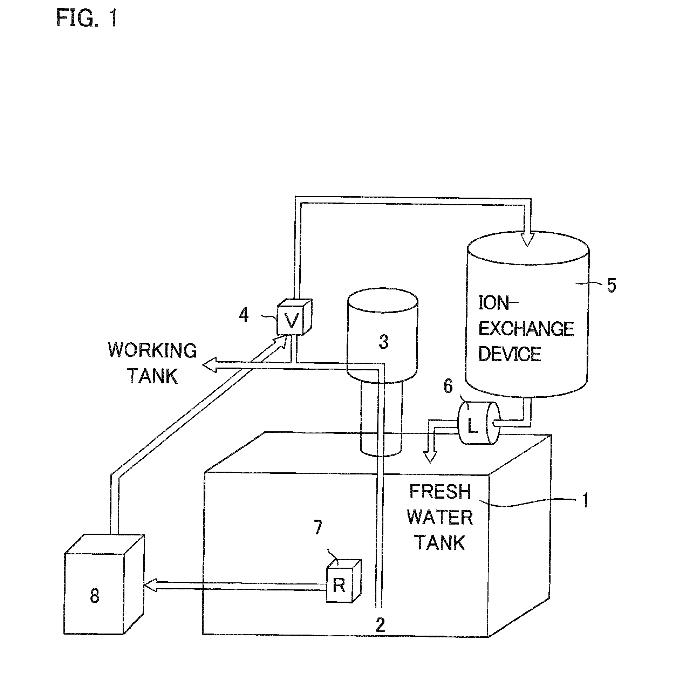

An electric discharge machine, with conductive working fluid, uses an ion-exchange unit to adjust specific resistance of the working fluid to be within a predetermined range. FIG. 1 is a block diagram showing a conventional electric discharge machine. In the figure, numeral 1 denotes a freshwater tank, 2 denotes a working fluid (freshwater), numeral 5 denotes an ion-exchange unit, numeral 3 denotes a feed pump for supplying the working fluid to a working fluid tank or the ion-exchange unit, numeral 4 denotes a changeover valve, numeral 6 denotes a flowmeter, numeral 7 denotes a specific resistance detection unit, numeral 8 denotes a control device.

The electric discharge machine shown in FIG. 1 is used as followings. The specific resistance detection unit detects specific resistance value of the working fluid 2, which is stored in the freshwater tank 1. If the specific resistance value is within the predetermined permissible range, the working fluid 2, supplied to the machining tank by the feed pump for machining, contains metal ion or metal sludge, and the specific resistance value decreases. Then the metal sludge is removed when the working fluid passes through a filter, and the working fluid returns to the freshwater tank 1.

When the specific resistance vale is below the predetermined permissible range, the control device control the changeover valve to open so that the flow path to the ion-exchange device 5 is formed. Then the working fluid 2 is pumped up by the feed pump 3, and passes through the ion-exchange device 5 via the changeover valve 4, so that ion in the working fluid is removed and the specific resistance increases. Thus the specific resistance of the working fluid 2 is controlled to be within the predetermined range. It is necessary to replace the ion-exchange device 5 with a new one, when the ion-exchange capacity of the ion-exchange device 5 is degraded.

Monitoring of the degradation of the ion-exchange device is accompanied with difficulties. Replacement time is largely dependent on the decision by the operator, since the life end of the ion-exchange device has not been clearly notified. In addition, there has been a problem in that the operator continues machining, not noticing the arrival of the life end of the ion-exchange device, with degraded machining accuracy and decreased machining efficiency.

To solve the problem, the prior art (Japanese Patent Laid-Open No. 62-297020, Japanese Patent Laid-Open No. 62-297020, Japanese Patent Laid-Open No. 62-297020) installs each electric conductivity detectors at the front side and the rear side, that is, installs two electric conductivity detectors in total. The electric conductivity detectors measure the electric conductivity of the working fluid before and after passing through the ion-exchange device, to obtain remaining ion-exchange capacity before the life end of the ion-exchange device. The prior art issues the warnings when or before the lifetime ends.

However, there has been a problem in that the device in the prior art is complicated and expensive since the prior art needs each detector at front side and rear side of the ion-exchange device.

### SUMMARY OF THE INVENTION

However, there has been a problem in that the device in the prior art is complicated and expensive since the prior art needs each detector at front side and rear side of the ion-exchange device.

In view of the above-described problems in the prior art techniques, the object of the present invention is to provide an electric discharge machine having a function of monitoring degradation of ion-exchange capacity of the ion-exchange unit and issuing the warnings when or before the lifetime ends, with simpler configuration and less expensively than the prior art.

An electric discharge machine according to the present invention is the electric discharge machine for changing a specific resistance of a working fluid by flowing the working fluid through a circulation line including an ion-exchange device, the electric discharge machine including a specific resistance detection unit configured to detect a specific resistance of the working fluid, a flow time measuring unit configured to measure flow time of the working fluid into the ion-exchange device, and a determination unit configured to determine that the ion-exchange device reaches a life end, when change value of the specific resistance of the working fluid is out of the predetermined range.

An electric discharge machine according to the present invention is the electric discharge machine for changing a specific resistance of a working fluid by flowing the working fluid through a circulation line including an ion-exchange device, the electric discharge machine including a specific resistance detection unit configured to detect a specific resistance of the working fluid, a flow time measuring unit configured to measure flow time of the working fluid into the ion-exchange device, and a determination unit configured to determine that the ion-exchange device reaches a life end, when a time needed for a predetermined change of the specific resistance of the working fluid is out of the predetermined range.

An electric discharge machine according to the present invention is the electric discharge machine for changing a specific resistance of a working fluid by flowing the working fluid through a circulation line including an ion-exchange device, the electric discharge machine including an electric conductivity detection unit configured to detect an electric conductivity of the working fluid, a flow time measuring unit configured to measure flow time of the working fluid into the ion-exchange device, and a determination unit configured to determine that the ion-exchange device reaches a life end, when change value of the electric conductivity of the working fluid is out of the predetermined range.

An electric discharge machine according to the present invention is the electric discharge machine for changing a specific resistance of a working fluid by flowing the working fluid through a circulation line including an ion-exchange device, the electric discharge machine including an electric conductivity detection unit configured to detect an electric conductivity of the working fluid, a flow time measuring unit configured to measure flow time of the working fluid into the ion-exchange device, and a determination unit configured to determine that the ion-exchange device reaches a life end, when a time needed for a predetermined change of the electric conductivity of the working fluid is out of the predetermined range.

The electric discharge machine according may further include a display unit configured to display that the ion-exchange device reaches a life end when the determine unit determines the ion-exchange device reaches the life end.

Machining may be stopped when the determine unit determines the ion-exchange device reaches the life end.

The present invention, with the configuration described above, can provide an electric discharge machine, having a function of monitoring degradation of ion-exchange capacity of the ion-exchange unit and issuing the warnings when or before the lifetime ends, with simpler configuration and less expensively than the prior art, since only one specific resistance detector is used for monitoring deterioration of the capacity of the ion-exchange device.

### BRIEF DESCRIPTION OF THE DRAWINGS

The above-described object, the other object, and the feature of the invention will be proved from the description of embodiments below with reference to the accompanying drawings. In these drawings:
FIG. 1 is a block diagram showing an electric discharge machine.
FIG. 2 is a graph showing a time change of a specific resistance value according to an embodiment of the present invention.
FIG. 3 is a graph more specifically showing a specific resistance value according to an embodiment of the present invention.

### DETAILED DESCRIPTION OF THE PREFERRED EMBODIMENTS

The basic configurations of the electric discharge machine according to an embodiment of the present invention is similar to those of the conventional electric discharge machine shown in FIG. 1. In the present embodiment, the specific resistance detection unit 7 detects a specific resistance of the working fluid in the freshwater tank 1 while the working fluid 2 passes through the ion-exchange device 5, to record the average gradient of the specific resistance. When the average gradient is less than the predetermined time, it is determined that replacement time of the ion-exchange device 5 has arrived and warning is issued for an operator.

The working fluid 2 stored in the freshwater tank 1 is pumped up by the pump 3 and supplied to the machining tank, as shown in FIG. 1. When the specific resistance value of the working fluid 2, detected by the specific resistance detection unit 7, is below the range, the control unit 8 control the changeover valve 4 to supply the working fluid 2 to the ion-exchange device 5, so that the circulation line returning to the freshwater tank 1 is formed. During operation of the electric discharge machine, the pump 3 is always working to pump up the working fluid 2 from the freshwater tank to supply the working fluid to each part which needs the working fluid, so, the working fluid 2 is supplied to the ion-exchange device 5 when the changeover valve 4 is opened, and the working fluid with increased specific resistance returns to the freshwater tank 1, and the specific resistance of the working fluid 2 in the freshwater tank 1 increases. The increase of the specific resistance value R is detected by the specific resistance detection unit 7 installed near the pump 3.

Though the specific resistance detection unit 7 may be installed in any place where the specific resistance detection unit 7 can detect the specific resistance of the working fluid 2 in the freshwater tank 1, more effective control may be expected, when the specific resistance detection unit 7 is installed near the pump 3 as shown in FIG. 1 since the changeover valve 4 can be controlled based on the specific resistance of the working fluid 2 to be sent to the machining tank, and when the specific resistance detection unit 7 is installed at a remote location from a returning port of the working fluid 2 from the machining tank, disposure port of the working fluid 2 from the ion-exchange device 5, and the like, since more correct average specific resistance value of the working fluid 2 in the freshwater tank 1 is detected.

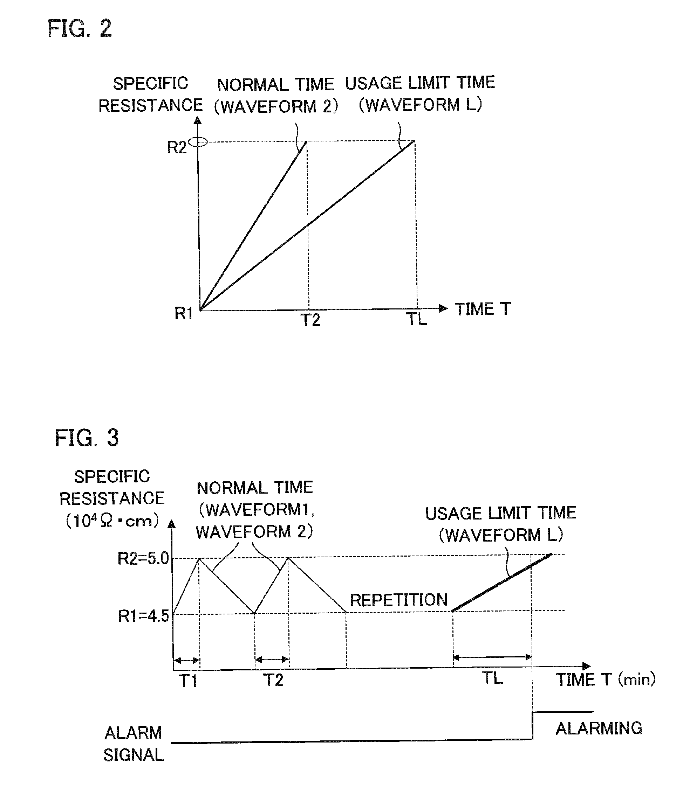

FIG. 2 is a graph showing a time change of the specific resistance value of the working fluid 2 in the freshwater tank 1. In the figure, the waveform L is a waveform of the specific resistance value during the usage limit time of the ion-exchange unit 5, and the waveform 2 is a waveform of the specific resistance value when the ion-exchange unit 5 is exhibiting normal performance. As shown in the figure, the waveform of the specific resistance value has a steeper gradient at the normal time. Time change of the specific resistance value is monitored to record the average gradient whenever the working fluid passes through the ion-exchange device 5, and it is determined that usage limit of the ion-exchange device 5 has arrived and warning is issued when the average gradient is less than the predetermined value, i.e., the average gradient of the waveform L. With the configuration mentioned above, performance of the ion-exchange device 5 is monitored only with one specific resistance detection device 7.

FIG. 3 is a graph more specifically showing time change of the specific resistance value according to an embodiment of the present invention. In the present embodiment, reference specific resistance values R1 and R2 (R1<R2) are defined. R1 is the reference value for starting the supply of the working fluid 2 to the ion-exchange device 5, and R2 is the reference value for stopping the supply of the working fluid 2 to the ion-exchange device 5. In an example shown in FIG. 3, R1 is equal to 4.5 x 10⁴ [ohm cm], while R2 is equal to 5.0 x 10⁴ [ohm cm]. These value of R1 and R2 may be preset in setting region of the electric discharge machine, or may be designated in the machining program.

As shown in FIG. 3, when the specific resistance value decreases to the first reference value R1, the changeover valve 4 is opened and the pump 3 starts to supply the working fluid 2 to the ion-exchange device 5, while supply of the working fluid 2 to the ion-exchange device 5 is stopped when the specific resistance value reaches the second reference value R2.

In FIG. 3, the waveform L shows time change of the specific resistance value during the usage limit time of the ion-exchange unit 5, and the waveforms 1 and 2 show a waveform of the specific resistance value when the ion-exchange unit 5 is exhibiting normal performance. In the present embodiment, the flow volume L of the working fluid 2 is maintained to be constant, and the time T in which the specific resistance value increases to R2 from R1 is measured and recorded whenever the working fluid 2 passes through the ion-exchange device 5.

As the ion-exchange capacity of the ion-exchange device 5 is degraded after the repeated usage of the ion-exchange device 5, T2 in which the specific resistance value increases to R2 from R1, gradually increases from T1 of the normal time. And when the time T exceeds the predetermined value T_{L}, the control device 8 determines that the replacement time before the life end of the ion-exchange device 5 has arrived, and issues a warning for replacement of the ion-exchange device. Here, the value of T_{L} may be preset in setting region of the electric discharge machine, or may be designated in the machining program.

The warning for the exchange of the ion-exchange device may be displayed on a display unit (not shown) installed in the electric discharge machine, or noticed using a lamp or sound. The machining currently performing may be stopped at a time when the warning is issued.

In the present embodiment, examples for detecting the specific resistance value are shown, however, the embodiment of the present invention is not limited to these example, and may be configured to use electric conductivity, which is a reverse number of the specific resistance value. In this case, an electric conductivity detection unit may be used on behalf of the specific resistance detection unit 7, and time change of the electric conductivity may be recorded to detect the usage limit of the ion-exchange device 5.

In the present embodiments, examples in which the life end of the ion-exchange device is detected based on the time in which the specific resistance value increases to R2 from R1. Alternatively, the life end may be detected based on the change value of the specific resistance within a predetermined time.

## Claims

1. An electric discharge machine for changing a specific resistance of a working fluid by flowing the working fluid through a circulation line including an ion-exchange device, the electric discharge machine comprising:
a specific resistance detection unit configured to detect a specific resistance of the working fluid;
a flow time measuring unit configured to measure flow time of the working fluid into the ion-exchange device; and
a determination unit configured to determine that the ion-exchange device reaches a life end, when change value of the specific resistance of the working fluid is out of the predetermined range.

2. An electric discharge machine for changing a specific resistance of a working fluid by flowing the working fluid through a circulation line including an ion-exchange device, the electric discharge machine comprising:
a specific resistance detection unit configured to detect a specific resistance of the working fluid;
a flow time measuring unit configured to measure flow time of the working fluid into the ion-exchange device; and
a determination unit configured to determine that the ion-exchange device reaches a life end, when a time needed for a predetermined change of the specific resistance of the working fluid is out of the predetermined range.

3. An electric discharge machine for changing a specific resistance of a working fluid by flowing the working fluid through a circulation line including an ion-exchange device, the electric discharge machine comprising:
an electric conductivity detection unit configured to detect an electric conductivity of the working fluid;
a flow time measuring unit configured to measure flow time of the working fluid into the ion-exchange device; and
a determination unit configured to determine that the ion-exchange device reaches a life end, when change value of the electric conductivity of the working fluid is out of the predetermined range.

4. An electric discharge machine for changing a specific resistance of a working fluid by flowing the working fluid through a circulation line including an ion-exchange device, the electric discharge machine comprising:
an electric conductivity detection unit configured to detect an electric conductivity of the working fluid;
a flow time measuring unit configured to measure flow time of the working fluid into the ion-exchange device; and
a determination unit configured to determine that the ion-exchange device reaches a life end, when a time needed for a predetermined change of the electric conductivity of the working fluid is out of the predetermined range.

5. An electric discharge machine according to any one of claims 1 to 4, further comprising: a display unit configured to display that the ion-exchange device reaches a life end when the determine unit determines the ion-exchange device reaches the life end.

6. An electric discharge machine according to any one of claims 1 to 4, wherein machining is stopped when the determine unit determines the ion-exchange device reaches the life end.
